# EUROPÄISCHE PATENTSCHRIFT

(11) **EP 0 978 348 B1**
(45) Veröffentlichungstag und Bekanntmachung des Hinweises auf die Patenterteilung: **22.09.2004**
(21) Anmeldenummer: 99810678.5
(22) Anmeldetag: 27.07.1999
(51) Int. Cl.: B23Q 1/01, B23Q 1/26, B23Q 9/00, B23Q 5/38

(54) **Führungsschiene für Geräte zur Beton- bzw. Gesteinsbohrung**
Guide rail for tools for the drilling of concrete or stone
Rail de guidage pour les outils de forage de la pierre ou du béton

(30) Priorität: 04.08.1998 DE 19835167
(43) Veröffentlichungstag der Anmeldung: 09.02.2000
(73) Patentinhaber: HILTI Aktiengesellschaft, 9494 Schaan (LI)
(72) Erfinder: Selb, Michael, 6800 Feldkirch (AT); Schittl, Josef, 6712 Thüringen (AT)
(74) Vertreter: Wildi, Roland

(56) Entgegenhaltungen:
- EP-A- 0 658 398
- DE-A- 3 211 444
- DE-A- 3 344 963

## Beschreibung

Die Erfindung betrifft eine Führungsschiene für Geräte zur Beton- bzw. Gesteinsbearbeitung, insbesondere für Betonsägen oder Kernbohrgeräte, gemäss dem Oberbegriff des Patentanspruchs 1.

Betonsägen und Kernbohrgeräte zur Beton- und Gesteinsbearbeitung sind hinlänglich bekannt und befinden sich beispielsweise im Verkaufsprogramm der Anmelderin. Die Bearbeitungsgeräte weisen einen Geräteschlitten mit in einem Gerätegehäuse untergebrachten, unmittelbaren Antriebs- und Verstelleinrichtungen für ein Sägeblatt bzw. für eine Bohrkrone auf. Der Antrieb der Bearbeitungsgeräte erfolgt üblicherweise elektrisch oder hydraulisch. Der Geräteschlitten ist an einer Führungsschiene montiert bzw. auf diese aufgesetzt. Die Führungsschiene ist mit Stütz- und Führungsflächen für am Gerätegehäuse vorgesehene Rollen oder Gleiter ausgestattet.

Während der Bearbeitung des Untergrunds ist der Geräteschlitten entlang der Längserstreckung der Führungsschiene verstellbar. So muss beispielsweise bei Kernbohrgeräten der Abstand der Bohrkrone zum Untergrund veränderbar sein, um die vorgesehene Bohrung anbringen zu können. Bei einer Betonsäge muss, zusätzlich zu seiner Tiefenverstellbarkeit, das Sägeblatt auch parallel zum Untergrund bewegbar sein, um den Schnitt auch parallel zur Führungsschiene vortreiben zu können. Um die Verstellbarkeit des Geräteschlittens zu gewährleisten, ist die Führungsschiene mit einer Profilierung ausgestattet, die üblicherweise als Zahnleiste ausgebildet ist. Eine am Gerätegehäuse vorgesehene Vorschubeinrichtung greift in die Eingriffskanten der Zahnleiste ein und gewährleistet die gewünschte Verstellbarkeit in Längsrichtung der Führungsschiene. Die Vorschubeinrichtung kann händisch betätigbar sein, beispielsweise indem ein mit der Zahnleiste in Eingriff stehendes Zahnrad über eine Handkurbel angetrieben wird. Diese Lösung findet üblicherweise bei Kernbohrgeräten Verwendung. Bei Betonsägen erfolgt die Verstellung des Geräteschlittens in der Regel automatisch. Dazu ragt aus der der Zahnleiste zugewandten Seite des Gerätegehäuses beispielsweise ein Zahnrad, das im gewünschten Umfang automatisch rotierbar ist. Die in Eingriff stehenden Zähne des Zahnrads und der Zahnleiste gewährleisten die gewünschte Verstellbarkeit des Geräteschlittens entlang der Führungsschiene.

Die Führungsschienen sind aus Gewichtsgründen meist Aluminiumprofile, die gegossen, gewalzt, gezogen oder auf ähnliche Weise hergestellt sind. Die Stütz- und Führungsflächen sind an Auflageleisten aus Stahl vorgesehen, die auf das Aluminiumprofil aufgeschraubt werden. Die Auflageleisten können beispielsweise aus einem korrosionsbeständigen Stahl sein. Die Schraubverbindung mit dem Aluminiumprofil bietet auch die Möglichkeit, die Stahlleisten bei Bedarf zu wechseln. Die Zahnleiste besteht aus Korrosionsgründen üblicherweise aus einem verzinkten Stahl. Die Zähne werden meist spanend durch Fräsen hergestellt. Die separate Zahnleiste wird ebenfalls auf das Aluminiumprofil aufgeschraubt. Die bekannten Führungsschienen sind demnach Verbundkonstruktionen aus Aluminiumprofilen und Stahlteilen. Die Herstellung der Einzelteile erfordert zahlreiche Fertigungsschritte. Die Montage der Schiene ist sehr komplex und bedingt eine Vielzahl von Montagevorgängen. Die Fertigung dieser bekannten Führungsschienen ist daher sehr arbeitsintensiv, zeitaufwendig und teuer. Trotz des Aluminiumprofils weist die Führungsschiene wegen der aufgeschraubten Stahlteile ein verhältnismässig grosses Gewicht auf. Daher sind sie üblicherweise nur in vom Anbieter vorgegebenen Längen von etwa 1 - 2,5 m verfügbar. Diese Längen sind ein Ergebnis des Gesamtgewichts der Führungsschienen, das sich aus demjenigen der Aluminiumprofile und der montierten Stahlteile ergibt. Die Länge der Führungsschienen sind dabei derart gewählt, dass das resultierende Gewicht jeder Schiene für den Anwender gerade noch tolerierbar ist. Je nach Bedarf sind die einzelnen Schienenstücke vom Anmelder zu der gewünschten Länge zusammenstellbar.

Der vorliegenden Erfindung liegt daher die Aufgabe zugrunde, eine Führungschiene für Betonsägen oder Kernbohrgeräte dahingehend zu modifizieren, dass diesen Nachteilen der Produkte des Stands der Technik abgeholfen wird. Es soll eine Führungsschiene geschaffen werden, deren Herstellung vereinfacht ist. Aufwendige vorbereitende Fertigungs- und Montageschritte sollen vermindert werden. Die Handhabbarkeit der Führungsschiene für den Anwender soll vereinfacht werden, indem insbesondere ihr Gewicht reduziert wird. Dabei soll die Vorraussetzung einer einfachen Anpassung an die vom Anwender gewünschte Länge der Schiene geschaffen werden.

Die Lösung dieser Aufgaben besteht in einer Führungsschiene mit den im kennzeichnenden Abschnitt des Patentanspruchs 1 angeführten Merkmalen. Die erfindungsgemässe Führungsschiene für Geräte zur Beton- bzw. Gesteinsbearbeitung, insbesondere für Betonsägen oder Kernbohrgeräte, weist in Längsrichtung verlaufende Stütz- und Führungsflächen für das Gerätegehäuse eines Bearbeitungsgeräts auf. Parallel zu den Stütz- und Führungsflächen erstreckt sich eine Profilierung mit in regelmässigem Abstand voneinander angeordneten, quer zur Längserstreckung verlaufenden Eingriffskanten für eine am Bearbeitungsgerät vorgesehene Vorschubeinrichtung. Die Führungsschiene ist ein aus einem länglichen Blechstanzbiegeteil gebogenes Blechprofil. Die Stütz- und Führungsflächen und die Profilierung für die Vorschubeinrichtung sind einstückig am Blechprofil integriert.

Durch die einstückige Ausbildung der Führungsschiene als Blechprofil aus einem Blechstanzbiegeteil werden die für die Herstellung erforderlichen Bearbeitungsschritte deutlich reduziert. Blechteile sind einfach herstellbar und bearbeitbar. Die vorbereitenden Arbeiten wie Zuschneiden, Stanzen oder dergleichen sind in einem dem eigentlichen Biegeschritt zur Herstellung des gewünschten Blechprofils unmittelbar vorgelagerten Arbeitsgang durchführbar. Die Herstellung der Führungsschiene kann in einem kontinuierlichen Durchlauf durch eine aus dem Stand der Technik bekannte Blechprofilierungsanlage erfolgen. Mit der Formgebung des Blechprofils werden auch die Stützund Führungsflächen und die Profilierung für die Vorschubeinrichtung des Geräteschlittens hergestellt. Aufwendige separate Montageschritte, wie beispielsweise das Aufschrauben von Stahlleisten oder rostfreien Zahnleisten, entfallen. Das Gewicht der Führungsschiene stellt nicht mehr den primär limitierenden Faktor für die Ablängung dar, da Blechprofile im allgemeinen relativ leicht sind. Die Blechprofile können daher vom Herstteller in relativ grossen, einheitlichen Längen bereitgestellt werden, was den Aufwand für die Lagerung reduziert und die Logistik vereinfacht. In einem späteren Schritt können die Führungsschienen auch vom Anwender selbst sehr einfach auf die für ihn gerade erforderliche Länge zugeschnitten werden.

In einer Variante der Erfindung sind die Eingriffskanten für die Vorschubeinrichtung an Querstegen vorgesehen, die in regelmässigem Abstand voneinander an einer Flachseite des Blechprofils angeordnet sind. Vorzugsweise sind die Querstege zwischen den Stützund Führungsflächen angeordnet. Beispielsweise können die Querstege erhaben aus der Oberfläche der Führungsschiene hervorspringen. Die Querstege können dabei beispielsweise durch Prägen oder Stanzen der Rückseite des Blechprofils hergestellt sein.

In einer vorteilhaften Ausführungsvariante der Erfindung sind die Eingriffskanten von Querstegen gebildet, die zwischen in regelmässigem Abstand voneinander vorgesehenen Lochungen des Blechprofils angeordnet sind. Die Lochungen erfolgen bevorzugt vor dem Biegeschritt. Als Herstellungsverfahren kommt beispielsweise ein Stanzverfahren in Frage. Die Lochungen können auch spanend durch Fräsen erstellt werden. Schliesslich besteht auch die Möglichkeit, die Lochungen mit einer Lasereinrichtung zu schneiden. Auf diese Weise können die Lochungen auch erst am bereits fertig gebogenen Blechprofil erstellt werden.

Für den Herstellungsprozess erweist es sich von Vorteil, wenn die Stütz- und Führungsflächen symmetrisch in Bezug auf die Längsanordnung der Querstege angeordnet sind. Die erfindungsgemässe, mittige Anordnung der Querstege, in die die Vorschubeinrichtung des Geräteschlittens eingreift, erleichtert auch die Führung und verhindert ein Verkanten desselben.

Im Hinblick auf den Gewichtsvorteil, der mit einem Blechprofil erzielbar ist, und auf die geforderte Festigkeit der Führungsschiene erweist es sich als zweckmässig, wenn das Blechprofil eine Wandstärke von etwa 1 mm bis etwa 4 mm aufweist.

Indem das Blechprofil aus einem rostfreien Stahlblech besteht, ist für die gesamte Führungsschiene Rostfreiheit gewährleistet.

Aus Gründen der Festigkeit erweist es sich von Vorteil, wenn das Blechprofil entlang seiner Längsseiten geschlossen ausgebildet ist. Dazu sind die Längskanten des Blechstanzbiegeteils vorzugsweise miteinander verschweisst. Die Verschweissung erfolgt vorzugsweise während oder gegen Ende des Biegeschrittes innerhalb der Blechprofilierungsanlage.

Für die Festigkeit der Führungsschiene erweist es sich gleichfalls als vorteilhaft, wenn das Blechprofil einen Hohlraum umschliesst. Das derart entstehende Blechprofil weist allseitig gegenüber Belastungen eine ausreichende Festigkeit auf. Gegenüber einer vollmassiven Konstruktion liegt ein grosser Vorteil in der Gewichtsersparnis.

Eine weitere, sehr vorteilhafte Weiterbildung der Erfindung besteht darin, dass an der von der Abstützfläche abgewandten Seite des Blechprofils in Längsrichtung verlaufende Laschen vorgesehen sind, die symmetrisch zueinander angeordnet sind. Die Längsränder der Laschen sind einander zugekehrt und zur Anbindung an Befestigungselemente ausgebildet, die beispielsweise der Festlegung der Schiene am Untergrund dienen.

Im folgenden wird die Erfindung unter Bezugnahme auf ein in den schematischen Figuren dargestelltes Ausführungsbeispiel näher erläutert. Es zeigen:
Fig. 1 eine perspektivische Ansicht der Führungsschiene; und
Fig. 2 einen Querschnitt der Führungsschiene aus Fig. 1.

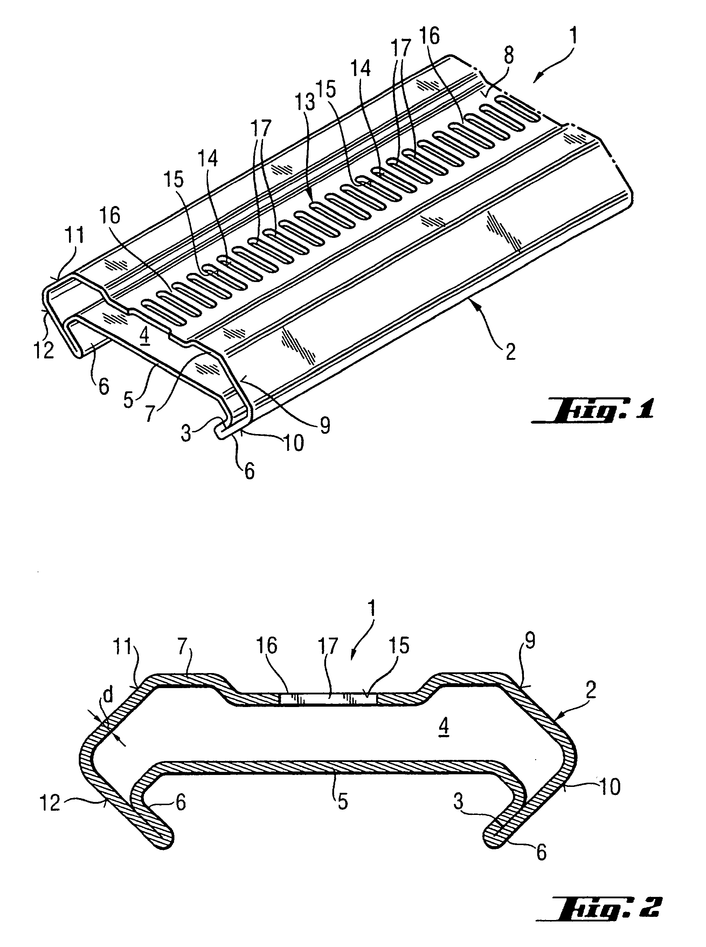

Das in Fig. 1 und 2 dargestellte Ausführungsbeispiel der erfindungsgemässen Führungsschiene trägt gesamthaft das Bezugszeichen 1. Die Führungsschiene 1 besteht aus einem Blechstanzbiegeteil, vorzugsweise aus einem Stahlblech, das in einer Blechprofilierungsanlage auf an sich bekannte Art zu einem Blechprofil gebogen ist. Die Wandstärke d des Blechprofils 2 beträgt vorzugsweise etwa 1 mm bis etwa 4 mm. Gemäss dem dargestellten Ausführungsbeispiel weist das Blechprofil 2 eine Rückseite 5 und ein Oberteil 7 auf, die einstückig miteinander verbunden und an ihren Längskanten beispielsweise miteinander verschweisst sind, was in Fig. 1 und 2 durch das Bezugszeichen 3 angedeutet ist. Das auf diese Weise gebildete Blechprofil 2 ist ein Hohlprofil mit einem etwa sichelförmigen Hohlraum 4. Die aneinander anliegenden Längsseiten der Rückseite 5 und des Oberteils 7 sind als Laschen 6 ausgebildet und weisen aufeinander zugekehrte Längsränder auf. Im Überlappungsbereich der Rück-seite 5 und der Oberseite 7 weisen die Laschen die doppelte Wandstärke d des Blechprofils 2 auf. Die Laschen 6 dienen der Anbindung von Befestigungsklemmen oder dgl. Befestigungselemente, mit denen die Führungsschiene 1 beispielsweise am Boden festlegbar ist.

Die Längsseiten des Oberteils 7 sind derart gebogen, dass sie Stütz- und Führungsflächen 9, 10 bzw. 11, 12 bilden, die miteinander jeweils einen spitzen Winkel einschliessen und zur Unterstützung und Führung eines nicht dargestellten Geräteschlittens des Bearbeitungsgeräts dienen. Der zwischen den Stütz- und Führungsflächen 9, 11 liegende Mittenabschnitt des Oberteils 7 ist als flache Oberseite 8 ausgebildet. Die flache Oberseite 8 der Führungsschiene 1 ist mit einer Profilierung 13 für eine am nicht dargestellten Bearbeitungsgerät vorgesehene Vorschubeinrichtung ausgestattet. Im gegenständlichen Ausführungsbeispiel sind dazu in der Oberseite 8 Lochungen 17 angebracht, deren Haupterstreckung quer zur Längserstreckung der Führungsschiene 1 verläuft. Die Lochungen 17 sind in gleichmässigem Abstand voneinander in Längsrichtung der Führungsschiene angeordnet. Zwischen den Lochungen 17 verbleiben Querstege 16. Die beiden Ränder jedes Querstegs 16 bilden Eingriffkanten 14 bzw. 15 für die Vorschubeinrichung des Bearbeitungsgeräts, beispielsweise für die Zähne eines aus dem Gerätegehäuse ragenden Zahnrads. Die Lochungen 17 können gestanzt, gefräst oder beispielsweise auch mit einer Lasereinrichtung geschnitten sein. Die zwischen den Lochungen 17 verbleibenden Querstege 16 erfüllen dieselbe Funktion wie die Zähne einer gesondert aufgeschraubten Zahnleiste bei den Führungsschienen des Stands der Technik. In einer Variante der Erfindung können die Querstege auch von rippenartigen Profilierungen gebildet sein, die gegenüber der flachen Oberseite hervorspringen. Bei dieser Variante der Führungsschiene können die Lochungen entfallen. Die Herstellung der rippenartigen Profilierungen kann beispielsweise durch Prägen der Oberseite von ihrer Rückfläche her erfolgen.

Die erfindungsgemässe Führungsschiene ist einfach und kostengünstig herstellbar. Indem das Blechprofil aus einem rostfreien Stahlblech besteht, ist für die gesamte Führungsschiene Korrosionsbeständigkeit gewährleistet. Blechprofile zeichnen sich durch ihr relativ geringes Gewicht aus und weisen trotzdem aufgrund der Formgebung die erforderliche Festigkeit auf. Die Führungsschiene ist in einem kontinuierlichen Fertigungsverfahren herstellbar. Die erzeugten Längen sind im Hinblick auf einfache Lagerung und Handhabbarkeit optimierbar. Die als Blechprofile ausgebildeten Führungsschienen sind relativ einfach nach Bedarf ablängbar. Im wesentlichen wird dazu nur eine Blechschere benötigt. Dadurch hat der Anwender auch die Möglichkeit, die Führungsschiene erst unmittelbar vor Ort auf die gewünschte Länge abzuschneiden.

## Patentansprüche

1. Führungsschiene für Geräte zur Beton- bzw. Gesteinsbearbeitung, insbesondere für Betonsägen oder Kernbohrgeräte, mit in Längsrichtung verlaufenden Stützund Führungsflächen (9, 10, 11, 12) für ein Gerätegehäuse eines Bearbeitungsgeräts und einer sich parallel zu den Stütz- und Führungsflächen (9, 10, 11, 12) erstreckenden Profilierung (13) mit in regelmässigem Abstand voneinander angeordneten, quer zur Längserstreckung verlaufenden Eingriffskanten (14, 15) für eine am Bearbeitungsgerät vorgesehene Vorschubeinrichtung, **dadurch gekennzeichnet, dass** die Führungsschiene (1) ein aus einem länglichen Blechstanzbiegeteil gebogenes Blechprofil (2) ist und die Stütz- und Führungsflächen (9, 10, 11, 12) sowie die Profilierung (13) für die Vorschubeinrichtung einstückig am Blechprofil (2) integriert sind, wobei die Profilierung (B) entlang der gesamten Längserstreckung der Führungsschiene (1) angeordnet ist.

2. Führungsschiene nach Anspruch 1, **dadurch gekennzeichnet, dass** die Eingriffskanten (14, 15) für die Vorschubeinrichtung an Querstegen (16) vorgesehen sind, die in regelmässigem Abstand voneinander an einer flachen Oberseite (8) des Blechprofils (2) angeordnet sind.

3. Führungsschiene nach Anspruch 2, **dadurch gekennzeichnet, dass** die Querstege (16) zwischen in regelmässigem Abstand voneinander vorgesehenen Lochungen (17) des Blechprofils (2) angeordnet sind.

4. Führungsschiene nach Anspruch 2 oder 3, **dadurch gekennzeichnet, dass** die Stütz- und Führungsflächen (9, 10, 11, 12) symmetrisch in Bezug auf die Längsanordnung der Querstege (16) angeordnet sind.

5. Führungsschiene nach einem der vorangehenden Ansprüche, **dadurch gekennzeichnet, dass** das Blechprofil (2) eine Wandstärke (d) von etwa 1 mm bis etwa 4 mm aufweist.

6. Führungsschiene nach einem der vorangehenden Ansprüche, **dadurch gekennzeichnet, dass** das Blechprofil (2) ein rostfreies Stahlblech ist.

7. Führungsschiene nach einem der vorangehenden Ansprüche, **dadurch gekennzeichnet, dass** das Blechprofil (2) entlang seiner Längsseiten geschlossen ausgebildet ist, vorzugsweise durch Verschweissen der Längskanten (6) des Blechstanzbiegeteils.

8. Führungsschiene nach Anspruch 7, **dadurch gekennzeichnet, dass** das Blechprofil (2) einen Hohlraum (4) umschliesst.

9. Führungsschiene nach Anspruch 7 oder 8, **dadurch gekennzeichnet, dass** an der der Profilierung (13) abgewandten Seite des Blechprofils (2) symmetrisch zueinander in Längsrichtung verlaufende Laschen (6) vorgesehen sind, deren Längsränder einander zugekehrt sind und zur Anbindung an Befestigungselemente ausgebildet sind, die beispielsweise der Festlegung der Führungsschiene (1) am Untergrund dienen.

## Claims

1. Guide rails for devices for working concrete and stone, particularly for concrete saws and core drilling devices, with support and guide faces (9, 10, 11, 12) for a device housing of a machining apparatus and a sectional form (13), extending parallel to the support and guide faces (9, 10, 11, 12), with contact rims (14, 15), arranged with a separation between them, for a thrust or feeder device on the machining apparatus, **characterized in that** the guide rail (1) is a sheet-metal section (2) curved from an oblong, bending blank and the support and guide faces (9, 10, 11, 12) and the section (13) for the thrust or feeder device are integrated as a single piece on the sheet-metal section (2), whereby the sectional form (13) is disposed along the whole length of the guide rail (1).

2. Guide rail in accordance with claim 1, **characterized in that** the contact rims (14, 15), for the thrust or feeder device, are on transverse webs (16) arranged with regular gaps between them on a flat upper side (8) of the sheet-metal section (2).

3. Guide rail in accordance with claim 2, **characterized in that** the transverse webs (16) are arranged between openings (17), in the sheet-metal section (2), with regular gaps (17) between them.

4. Guide rail in accordance with claim 2 or 3, **characterized in that** the support and guide faces (9, 10, 11, 12) are arranged symmetrically in relation to the longitudinal arrangement of the transverse webs (16).

5. Guide rail in accordance with one of the above claims, **characterized in that** the sheet-metal section (2) has a thickness (d) of approximately 1 mm to 4 mm.

6. Guide rail in accordance with one of the preceding claims, **characterized in that** the sheet-metal section (2) is a rustproof steel plate.

7. Guide rail in accordance with one of the preceding claims, **characterized in that** the sheet-metal section (2) is closed, preferably by welding the longitudinal rims (6) of the bending sheet-metal blank, along its longitudinal sides.

8. Guide rail in accordance with claim 7, **characterized in that** the sheet-metal section (2) encloses a cavity (4).

9. Guide rail in accordance with claim 7 or 8, **characterized in that**, on the side of the sheet-metal section (2) facing away from the sectional form (13), there are side bars (6) running symmetrically in relation to each other in a longitudinal direction, the longitudinal rims of the said side being turned towards each other and being developed for attachment to fastening elements which serve to fasten the guide rail (1) to the underlying base material for example.

## Revendications

1. Rail de guidage pour outils destinés au travail du béton, respectivement de la roche, en particulier pour scies à béton ou carotteuses, avec des surfaces d'appui et de guidage (9, 10, 11, 12) s'étendant dans la direction longitudinale pour un carter d'outil d'un outil de travail et avec un profilage (13) s'étendant parallèlement aux surfaces d'appui et de guidage (9, 10, 11, 12) avec des bords de prise (14, 15) disposés à intervalles réguliers les uns des autres et s'étendant transversalement à l'extension longitudinale pour un dispositif d'avance prévu sur l'outil de travail, **caractérisé en ce que** le rail de guidage (1) est un profilé en tôle (2) obtenu par pliage d'une pièce cintrée allongée en tôle découpée, et les surfaces d'appui et de guidage (9, 10, 11, 12) ainsi que le profilage (13) pour le dispositif d'avance sont intégrés d'un seul tenant au profilé en tôle (2), le profilage (13) étant présent sur toute l'extension longitudinale du rail de guidage (1).

2. Rail de guidage selon la revendication 1, **caractérisé en ce que** les bords de prise (14, 15) pour le dispositif d'avance sont prévus au niveau de barrettes transversales (16) qui sont disposées à intervalles réguliers les unes des autres sur un dessus plat (8) du profilé en tôle (2).

3. Rail de guidage selon la revendication 2, **caractérisé en ce que** les barrettes transversales (16) sont disposées entre des perforations (17) du profilé en tôle (2) prévues à intervalles réguliers les unes des autres.

4. Rail de guidage selon la revendication 2 ou 3, **caractérisé en ce que** les surfaces d'appui et de guidage (9, 10, 11, 12) sont disposées symétriquement par rapport à l'agencement longitudinal des barrettes transversales (16).

5. Rail de guidage selon une des revendications précédentes, **caractérisé en ce que** le profilé en tôle (2) présente une épaisseur de paroi (d) d'environ 1 mm à environ 4 mm.

6. Rail de guidage selon une des revendications précédentes, **caractérisé en ce que** le profilé en tôle (2) est une tôle d'acier inoxydable.

7. Rail de guidage selon une des revendications précédentes, **caractérisé en ce que** le profilé en tôle (2) est conformé sous forme fermée le long de ses côtés longitudinaux, de préférence par soudage des bords longitudinaux (6) de la pièce cintrée en tôle découpée.

8. Rail de guidage selon la revendication 7, **caractérisé en ce que** le profilé en tôle (2) entoure une cavité (4).

9. Rail de guidage selon la revendication 7 ou 8, **caractérisé en ce que** sur le côté du profilé en tôle (2) orienté à l'opposé du profilage (13) sont prévues des pattes (6) qui s'étendent symétriquement l'une à l'autre dans la direction longitudinale et dont les bords longitudinaux sont tournés l'un vers l'autre et sont conformés en vue d'une liaison avec des éléments de fixation servant par exemple au blocage du rail de guidage (1).
